# EUROPÄISCHE PATENTSCHRIFT

(11) **EP 2 387 520 B1**
(45) Veröffentlichungstag und Bekanntmachung des Hinweises auf die Patenterteilung: **19.03.2014**
(21) Anmeldenummer: 09796968.7
(22) Anmeldetag: 18.12.2009
(51) Int. Cl.: B60R 21/232, B60R 21/233

(54) **KOPFAIRBAGMODUL FÜR EIN FAHRZEUG**
HEAD AIRBAG MODULE FOR A VEHICLE
MODULE DE COUSSIN GONFLABLE DE TÊTE POUR UN VÉHICULE

(30) Priorität: 16.01.2009 DE 102009004883
(43) Veröffentlichungstag der Anmeldung: 23.11.2011
(73) Patentinhaber: Volkswagen Aktiengesellschaft, 38440 Wolfsburg (DE)
(72) Erfinder: HAGEN, Stefan, 38479 Tappenbeck (DE)
(86) Internationale Anmeldenummer: PCT/EP2009/009099
(87) Internationale Veröffentlichungsnummer: WO 2010/081521

(56) Entgegenhaltungen:
- EP-A- 1 577 172
- EP-A- 1 637 408
- US-A1- 2007 145 726

## Beschreibung

Die Erfindung betrifft ein Kopfairbagmodul für ein Fahrzeug nach dem Oberbegriff des Patentanspruches 1 sowie ein Verfahren zum Auslösen eines solchen Kopfairbags nach dem Patentanspruch 11.

Kopfairbags sind im Dachrahmen eines Fahrzeuges integriert und können sich von der A-Säule bis zur C- oder D-Säule entlang der seitlichen Fensterfront des Fahrzeuges erstrecken. Kopfairbags schützen den Kopf bei einem schweren Seitenaufprall oder Überschlag des Fahrzeuges und verhindern, dass beim Überschlag mit geöffneten Fenstern der Kopf des Fahrzeuginsassen aus dem Fahrzeug gedrückt wird.

Bei einem gattungsgemäßen Kopfairbagmodul ist dessen Airbag im Crashfall mit seiner Airbag-Hauptkammer in Fahrzeugquerrichtung zwischen dem Fahrzeuginsassen und einer einen Fahrzeuginnenraum begrenzenden Fahrzeugseitenwand angeordnet. Der Kopfairbag bietet insbesondere bei komplexen Überschlagunfällen einen Auspendelschutz für den Insassen-Kopf. Bei einem zu großen Kopf-Auspendelweg in der Fahrzeugquerrichtung, insbesondere bei einer Trefferposition im unteren Bereich des entfalteten Kopfairbags, besteht die Gefahr, dass der Insassen-Kopf unter den Airbag hindurch gleiten.

US 2007/0145726 A1 beschreibt ein Kopfairbagmodul gemäß den Oberbegriff des Patentanspruchs 1.

Ein solcher komplexer Überschlagunfall kann in einem Test simuliert werden, bei dem zunächst der Kopfairbag gezündet wird. In einem Zeitraum von 1,5 bis 6 s nach der Airbag-Zündung wird ausgehend vom Fahrzeuginnenraum ein linear beweglicher Kopf-Impaktor auf den entfalteten Airbag geschossen, der die kinetische Energie des Kopf-Impaktors aufnimmt. Mit dem Test ist ein crashbedingter Auspendelvorgang des Insassenkopfes nachbildbar. Die Test-Erfordernisse sind erfüllt, wenn der Kopf-Impaktor innerhalb eines vorgegebenen Auspendelweges vor dem geometrischen Kontaktpunkt mit der Fahrzeugseitenscheibe abgebremst wird.

Die Aufgabe der Erfindung besteht darin, ein Kopfairbagmodul bereitzustellen, das den Fahrzeuginsassen-Kopf bei einem crashbedingten Seitenaufprall zuverlässig schützt.

Die Aufgabe ist durch die Merkmale des Patentanspruches 1 oder des Patentanspruches 10 gelöst. Bevorzugte Weiterbildungen der Erfindung sind in den Unteransprüchen offenbart.

Gemäß Patentanspruch 1 weist der Airbag neben seiner Airbag-Hauptkammer eine Zusatzkammer auf. Die Zusatzkammer drückt bei im Crashfall entfaltetem Airbag die Airbag-Hauptkammer in der Fahrzeugquerrichtung in den Fahrzeuginnenraum hinein. Auf diese Weise ist ein Kontaktpunkt zwischen dem Insassen-Kopf und dem entfalteten Kopfairbag nach innen versetzt, wodurch eine im Vergleich zum Stand der Technik frühzeitigere Ankoppelung des Fahrzeuginsassen-Kopfes am Kopfairbag erfolgen kann. Dadurch ist in günstiger Weise der Auspendelweg des Insassen-Kopfes reduziert.

Die Airbag-Zusatzkammer kann im entfalteten Zustand zwischen einer Fahrzeugsäule, insbesondere der B-Säule, und der Airbag-Hauptkammer angeordnet sein. Die Fahrzeugsäule kann somit als Widerlager dienen, gegen das der entfaltete Kopfairbag über seine Zusatzkammer abgestützt ist.

Die Airbag-Hauptkammer kann sich über die gesamte seitliche Fensterfront ausgehend von der A-Säule bis zur C- oder D-Säule erstrecken. Im Vergleich dazu weist die Zusatzkammer eine in der Fahrzeuglängsrichtung reduzierte Länge auf, die so bemessen ist, dass die Airbag-Hauptkammer zuverlässig in den Fahrzeuginnenraum gedrückt ist. Bevorzugt kann die Zusatzkammer zwischen einem fondseitigen und einem frontseitigen Schutzbereich der Hauptkammer angeordnet sein. Bei einer solchen in etwa mittigen Anordnung kann die Zusatzkammer sowohl den fondseitigen als auch den frontseitigen Schutzbereich der Hauptkammer zuverlässig nach innen drücken.

Die Zusatzkammer kann als separater Airbag neben der Hauptkammer angeordnet sein. Bevorzugt ist jedoch eine einteilige Ausführung der Hauptkammer und der Zusatzkammer, bei der beide Kammern mit einer Überströmöffnung strömungstechnisch miteinander verbunden sind. Beiden Kammern kann somit ein gemeinsamer Gasgenerator zugeordnet sein, der bei Zündung beide Kammern füllen kann.

Für ein günstiges Entfaltungsverhalten des Kopfairbags ist es von Vorteil, wenn die Hauptkammer und die Zusatzkammer über eine Trennwand voneinander separiert sind. Alternativ zu einer solchen Kammerdoppelung können die Haupt- und Zusatzkammem auch kombiniert in einer gemeinsamen Kammer mit entsprechend großem Füllvolumen vorgesehen sein. Bei einer solchen groß dimensionierten Kammer ist jedoch im entfalteten Zustand die passende Airbaghöhel-breite nur schwer einstellbar.

Bei einem Primäraufprall des Insassenkopfes ist es von Vorteil, wenn dieser an einen möglichst steifen Airbag ankoppelt, während bei einem folgenden Sekundäraufprall der Gasdruck im Airbag bereits reduziert sein kann. Vor diesem Hintergrund kann die Zusatzkammer der Hauptkammer strömungstechnisch nachgeschaltet sein. Nach Zündung des Gasgenerators wird daher zunächst die Hauptkammer für einen Primäraufprall gefüllt, während sich die Zusatzkammer erst zeitverzögert entfaltet. Die Überströmöffnung zwischen der Zusatzkammer und der Hauptkammer wirkt dabei als Drossel, deren Strömungsquerschnitt den Zeitverzug bis zum Befüllen der Zusatzkammer bestimmt.

Auspendelvorgänge, bei denen der Insassenkopf über einen Auspendelweg gegen den entfalteten Kopfairbag geschleudert wird, ereignen sich insbesondere bei komplexen Überschlagunfällen. Deren Unfalldauer kann im Bereich mehrerer Sekunden liegen. Mit dem erfindungsgemäßen Kopfairbag kann in einem ersten Entfaltungsschritt zunächst nur die Airbag-Hauptkammer zwischen dem Fahrzeuginsassenkopf und der Fahrzeugseitenwand für einen Kopf-Primäraufprall entfaltet werden. In einem zweiten Entfaltungsschritt kann seitlich verzögert die Zusatzkammer entfaltet werden, die die Hauptkammer in den Fahrzeuginnenraum drückt, um den Auspendelweg des Insassenkopfes zu reduzieren.

Ein solcher komplexer Überschlagunfall kann in einem sogenannten Containment-Test simuliert werden, bei dem zunächst der Kopfairbag entzündet wird und anschließend ein Kopfimpaktor ausgehend vom Fahrzeuginnenraum mit vorgegebener Masse sowie vorgegebener Geschwindigkeit gegen den entfalteten Kopfairbag geschossen wird. Erfindungsgemäß kann die vollständige Entfaltung der Airbag-Hauptkammer zusammen mit der Airbag-Zusatzkammer in einem Bereich weniger Millisekunden erfolgen. Der Impaktor wird demgegenüber erst in einem Bereich von 1,5 bis 6 Sekunden nach erfolgter Airbagauslösung aktivert. Die Testerfordernisse sind erfüllt, wenn der Auspendelweg des Kopf-Impaktors vor einem geometrischen Kontaktpunkt mit der Seitenscheibe endet.

Die Hauptkammer des Kopfairbags kann bauraumgünstig an einer ihrer Längskanten in die, insbesondere streifenförmig ausgebildete Zusatzkammer übergehen. Auf diese Weise kann der Kopfairbag mit hoher Packungsdichte im Dachrahmen integriert werden. Das freie, von der Hauptkammer abragende Ende der streifenförmigen Zusatzkammer kann am Dachrahmen befestigt sein, so dass sich der Kopfairbag nach erfolgter Entfaltung im Querschnitt in etwa schlaufenartig vom Dachrahmen in den Fahrzeuginnenraum erstreckt.

Für eine einfache Fertigung kann der Kopfairbag durch zwei im wesentlichen deckungsgleiche Gewebe-Zuschnittteile gebildet werden. Die Zuschnittteile können randseitig miteinander verbunden sein. Üblicherweise können die Zuschnittteile aus einer Webbahn herausgeschnitten werden. Um dabei den Verschnitt zu minimieren, können die Kopfairbag-Zuschnittteile mit ihren streifenförmig ausgebildeten Zusatzkammem zueinander verschachtelt angeordnet werden.

Nachfolgend ist ein Ausführungsbeispiel der Erfindung anhand der beigefügten Figuren gezeigt.

Es zeigen:
- Fig. 1: in einer Seitenansicht den Kopfairbag des Kopfairbagmoduls in einem verstauten Zustand;
- Fig. 2 und 3: jeweils in einer Seitenansicht den Kopfairbag in einem teilweise entfalteten Zustand;
- Fig. 4: den Kopfairbag in einem vollständig entfalteten Zustand;
- Fig. 5: in einer Frontansicht vom Fahrzeuginnenraum in Fahrzeugquerrichtung y ein Airbagmodul mit nicht eingehängter Zusatzkammer;
- Fig. 6: in einer Frontansicht vom Fahrzeuginnenraum in Fahrzeugquerrichtung y ein Airbagmodul mit eingehängter Zusatzkammer, die zwischen einer Fahrzeugsäule und der Airbag-Hauptkammer angeordnet ist; und
- Fig. 7: in einer Draufsicht eine Webbahn mit Gewebe-Zuschnittteilen für den Kopfairbag.

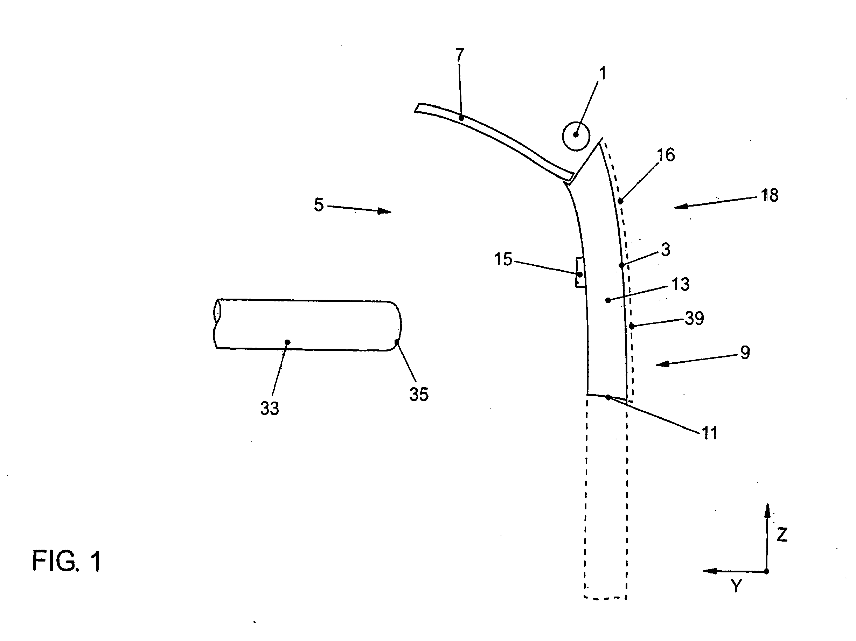

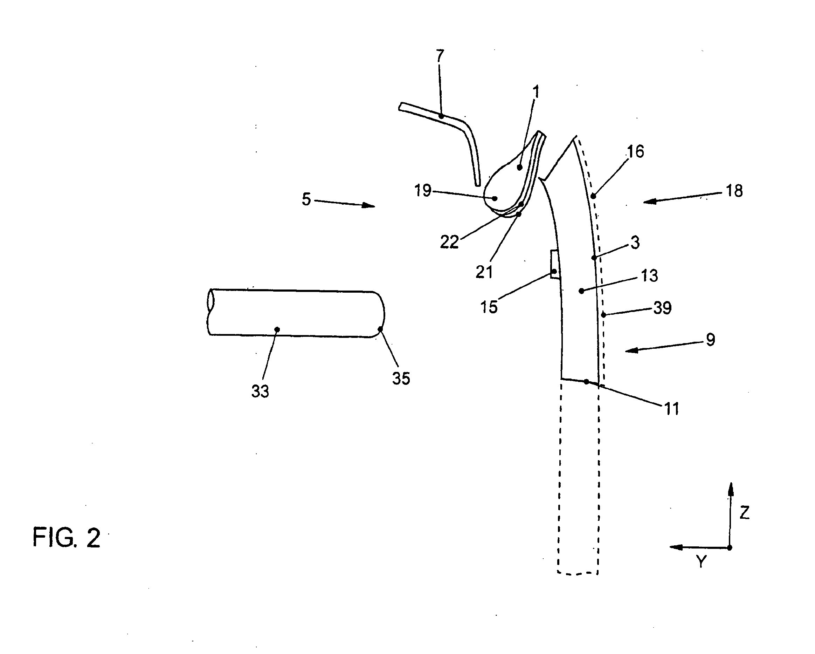

In den Fig. 1 bis 4 ist grob schematisch ein Kopfairbagmodul eines Fahrzeugs in einer Seitenansicht gezeigt. Vom Kopfairbagmodul ist hier lediglich der Airbag 1 dargestellt. Wie aus der Fig. 1 hervorgeht, ist der Airbag 1 im verstauten Zustand oberhalb einer B-Säule 3 angeordnet. In Richtung eines Fahrzeuginnenraumes 5 wird der Airbag 1 von einer Dachhimmel-Innenverkleidung 7 abgedeckt. Eine Entfaltung des Airbags wird später detailliert anhand der Fig. 2 bis 5 beschrieben.

Die Fig. 1 bis 4 zeigen die B-Säule 3 als Teil einer Fahrzeugseitenwand 9 oberhalb einer angedeuteten Türbrüstung 11. Auf ihrer dem Fahrzeuginnenraum 5 zugewandten Seite ist die B-Säule 3 mit einer Säulenverkleidung 13 versehen, in der eine Höhenverstellung 15 für einen nicht dargestellten Sicherheitsgurt integriert ist. In der Fig. 1 bis 4 ist zusätzlich ein Fenster 16 gezeigt, das hier in etwa flächenbündig mit einer Fahrzeugaußenseite 18 ist.

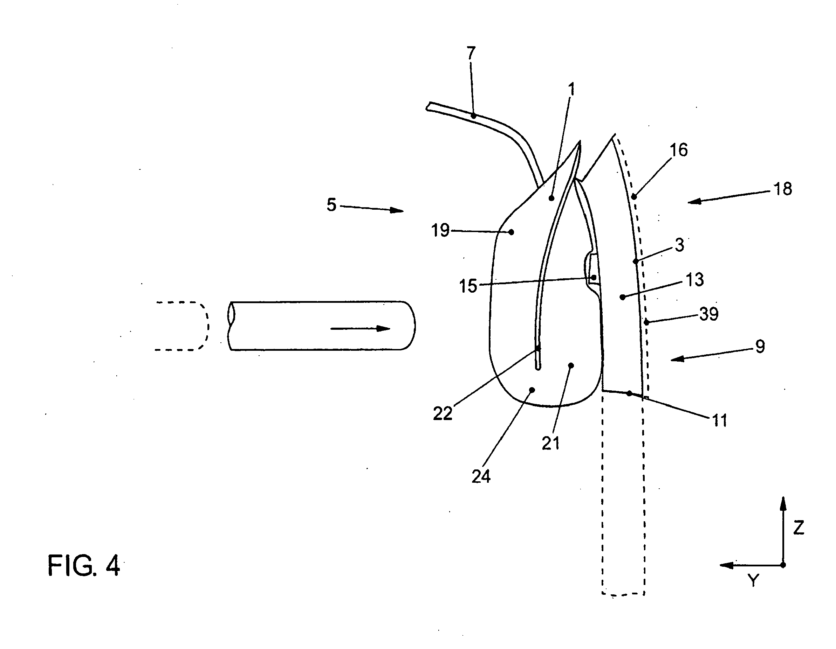

Wie in den Fig. 2 bis 7 dargestellt, weist der Airbag 1 eine Hauptkammer 19 und eine Zusatzkammer 21 auf. Die Fig. 2 bis 4 zeigen, dass die Zusatzkammer 21 von der Hauptkammer 19 bereichsweise über eine Trennwand 22 separiert ist. Mittels einer in den Fig. 4, 5 und 6 dargestellten Überströmöffnung 24 ist die Zusatzkammer 21 mit der Hauptkammer 19 strömungstechnisch verbunden.

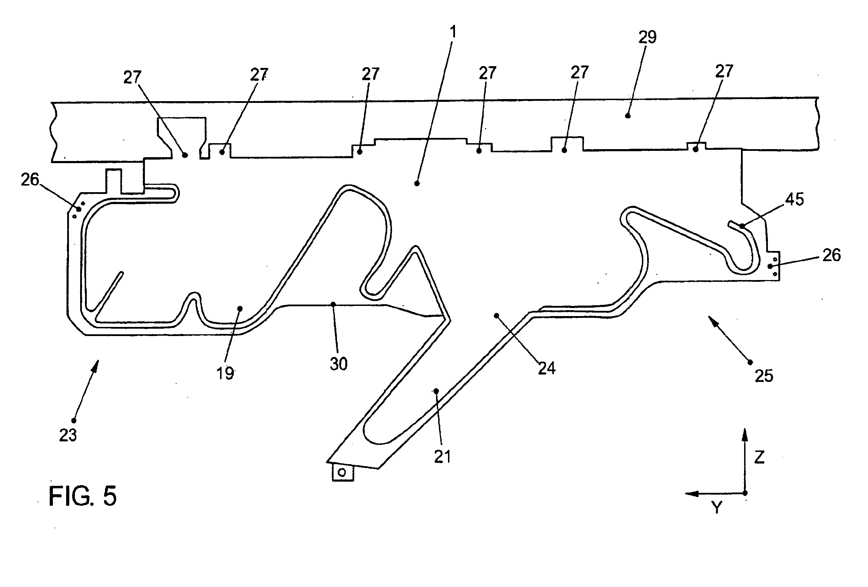

Aus der Fig. 5 geht hervor, dass die streifenförmige Zusatzkammer 21 in etwa mittig zwischen einem fondsseitigen Schutzbereich 23 und einem frontseitigen Schutzbereich 25 der Hauptkammer 19 angeordnet ist. In der Fahrzeuglängsrichtung x weist die Zusatzkammer 21 eine im Vergleich zur Hauptkammer 19 reduzierte Länge auf. Des Weiteren zeigt die Fig. 5, dass der Airbag 1 mittels Laschen 27 an einem Dachrahmen 29 befestigt ist.

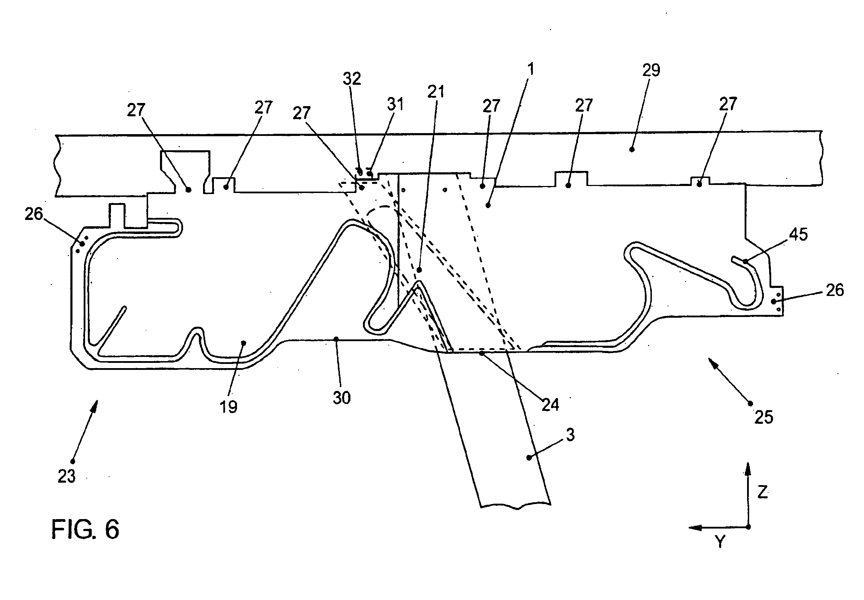

An ihrer vom Dachrahmen 29 abgewandten Längskante 30 geht die Hauptkammer 19 via der Überströmöffnung 24 in die streifenförmige Zusatzkammer 21 über. An dem von der Hauptkammer 19 abragenden Ende weist die Zusatzkammer 21 eine Lasche 31 auf, mit welcher die Zusatzkammer 21 am Dachrahmen 29 befestigt werden kann. Zudem zeigen die Fig. 5 und 6, dass am fondseitigen Ende und am frontseitigen Ende der Hauptkammer 19 ein Fangband 32 angeordnet ist.

In der Fig. 6 ist die Zusatzkammer 21 mittels der Lasche 31 am Dachrahmen 20 an einem gemeinsamen Befestigungspunkt 32 befestigt, so dass die Zusatzkammer 21 zwischen der Hauptkammer 19 und der B-Säule 3 angeordnet ist. Nach erfolgter Entfaltung ergibt sich so für den Airbag 1 eine im Querschnitt schlaufenartige Anordnung von Hauptkammer 19 und Zusatzkammer 21, wie es in der Fig. 4 verdeutlicht ist.

Im Folgenden wird die Wirkungsweise des Airbags 1 bei einem komplexen Überschlagunfall beschrieben, wie er in dem in den Fig. 1 bis 4 veranschaulichten Testverfahren simuliert ist. Bei diesem Testverfahren wird in einem Zeitraum von 1,5 bis 6 Sekunden nach Zündung des Airbags 1 ein linear geführter Balken 33 als Impaktor in Richtung vom Fahrzeuginnenraum 5 zur Fahrzeugseitenwand 9 gegen den entfalteten Airbag 1 geschossen, wie in den Fig. 1 bis 4 dargestellt. Am zum Airbag 1 zeigenden Ende des linear geführten Balkens 33 ist eine Kopfkalotte 35 vorgesehen. Der Impaktor 33 weist eine bestimmte Masse, vorzugsweise 18 kg, auf und wird mit einer bestimmten Geschwindigkeit, vorzugsweise 24 km/h, gegen den entfalteten Airbag 1 geschossen. Während des Tests sind die Fensterscheiben des Fensters 16 nach unten gefahren. Die Testerfordernisse sind erfüllt, wenn der Auspendelweg des Impaktors 33 vor einem geometrischen Kontaktpunkt 39 mit dem Fenster 16 endet.

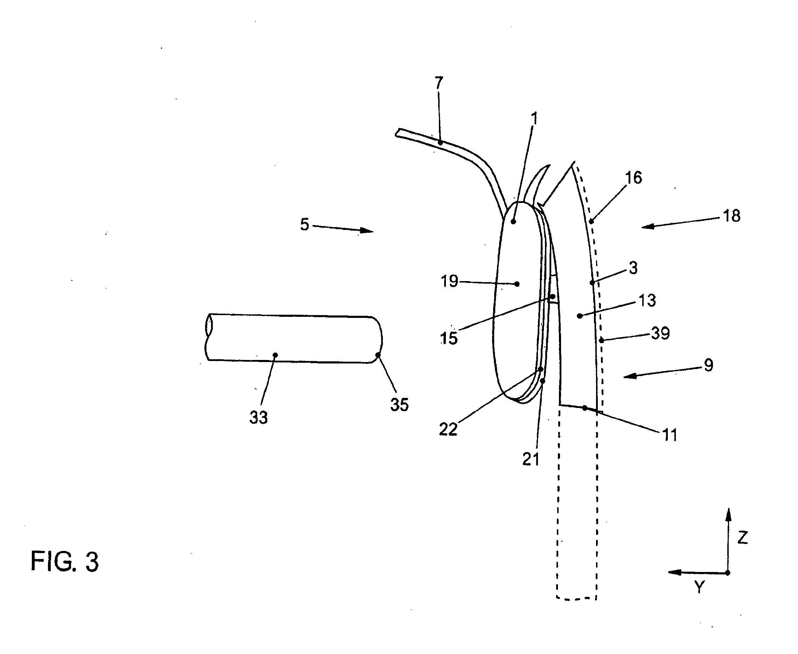

Wie die Fig. 2 und 3 zeigen, wird nach erfolgter Zündung des Airbags 1 zunächst in einem ersten Entfaltungsschritt die Hauptkammer 19 gefüllt. Dabei löst sich die Dachhimmel-Innenverkleidung 7 von der Säulenverkleidung 13, so dass sich der Airbag 1 in den Fahrzeuginnenraum 5 entfalten kann. Im entfalteten Zustand der Hauptkammer 19 ist der Airbag 1 zwischen einem nicht dargestellten Insassen-Kopf und der Fahrzeugseitenwand 9 angeordnet.

In einem zweiten Entfaltungsschritt wird zeitlich verzögert nach der Zündung des Airbags 1 die Zusatzkammer 21 unter Druckminderung des Airbags 1 gefüllt. Dabei wirkt die Überströmöffnung 24 als Drossel zwischen der Zusatzkammer 21 und der Hauptkammer 19. Beim Entfalten drückt die Zusatzkammer 21 die Hauptkammer 19 in Fahrzeugquerrichtung y in den Fahrzeuginnenraum 5, wie in der Fig. 4 gezeigt.

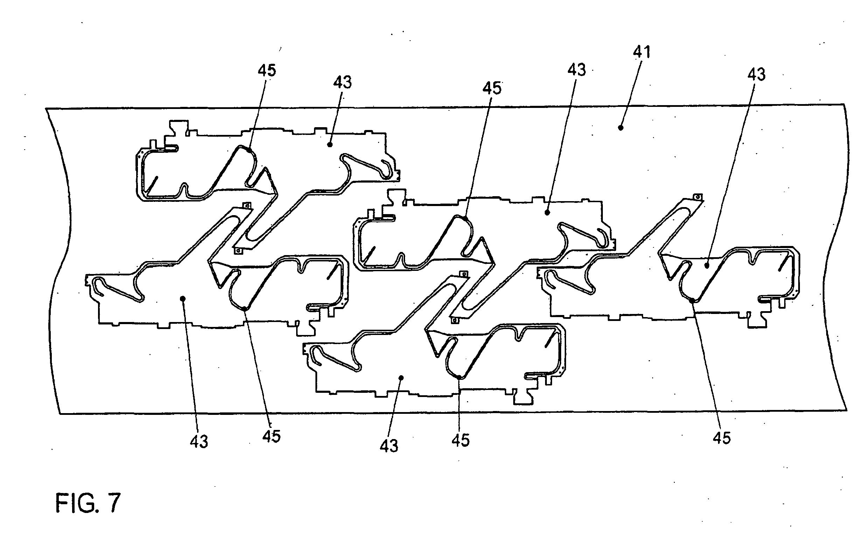

In der Fig. 7 ist ein Webband 41 mit deckungsgleichen Gewebe-Zuschnittteilen 43 gezeigt. Der Kopfairbag 1 mit seiner Hauptkammer 19 und seiner Zusatzkammer 21 wird durch je zwei deckungsgleiche Gewebe-Zuschnittteile, welche randseitig miteinander verbunden sind, gebildet. Um einen Verschnitt zu minimieren, sind die Gewebezuschnittteile 43 zueinander verschachtelt auf dem Webband 41 angeordnet. Wie aus den Fig. 5, 6 und 7 hervorgeht, sind die Gewebezuschnittteile 43 außerdem mit schlangenlinienförmigen Nähten 45 versehen. Der Nahtverlauf gewährleistet im Crashfall eine rasche Entfaltung des Airbags 1 in der Fahrzeugquerrichtung z.

### Bezugszeichenliste

- 1: Airbag
- 3: B-Säule
- 5: Fahrzeuginnenraum
- 7: Dachhimmel-Innenverkleidung
- 9: Fahrzeugseitenwand
- 11: Türbrüstung
- 13: Säulenverkleidung
- 15: Gurthöhenverstellung
- 16: Fenster
- 18: Fahrzeugaußenseite
- 19: Hauptkammer
- 21: Zusatzkammer
- 22: Trennwand
- 23: fondsseitiger Schutzbereich
- 24: Überströmöffnung
- 25: frontseitiger Schutzbereich
- 26: Fangband
- 27: Lasche
- 29: Dachrahmen
- 30: Längskante
- 31: Lasche
- 32: Befestigungspunkt
- 33: linear geführter Balken
- 35: Kopfkalotte
- 39: geometrischer Kontaktpunkt
- 41: Webband
- 43: Gewebe-Zuschnittteil
- 45: Naht

## Patentansprüche

1. Kopfairbagmodul für ein Fahrzeug, dessen Airbag (1) im Crashfall mit seiner Airbag-Hauptkammer (19) in Fahrzeugquerrichtung (y) zwischen einem Fahrzeuginsassen und einer einen Fahrzeuginnenraum (5) begrenzenden Fahrzeugseitenwand (9) angeordnet ist, wobei der Airbag (1) neben seiner Airbag-Hauptkammer (19) wenigstens eine Zusatzkammer (21) aufweist, die bei im Crashfall entfaltetem Airbag (1) die Airbag-Hauptkammer (19) in Fahrzeugquerrichtung (y) in den Fahrzeuginnenraum (5) drückt, **dadurch gekennzeichnet, dass** die Zusatzkammer (21) im Vergleich zur Hauptkammer (19) in der Fahrzeuglängsrichtung (x) eine reduzierte Länge aufweist.

2. Kopfairbagmodul nach Anspruch 1, **dadurch gekennzeichnet, dass** die Airbag-Zusatzkammer (21) im entfalteten Zustand zwischen einer Fahrzeugsäule, insbesondere der B-Säule (3), und der Airbag-Hauptkammer (19) angeordnet ist.

3. Kopfairbagmodul nach einem der Ansprüche 1 oder 2, **dadurch gekennzeichnet, dass** die Zusatzkammer (21) zwischen einem fondseitigen (23) und einem frontseitigen Bereich (25) der Hauptkammer (19) angeordnet ist.

4. Kopfairbagmodul nach einem der vorhergehenden Ansprüche, **dadurch gekennzeichnet, dass** die Zusatzkammer (21) mittels einer Überströmöffnung (24) strömungstechnisch mit der Hauptkammer (19) verbunden ist.

5. Kopfairbagmodul nach Anspruch 4, **dadurch gekennzeichnet, dass** die Zusatzkammer (21) der Hauptkammer (19) strömungstechnisch nachgeschaltet ist.

6. Kopfairbagmodul nach einem der vorhergehenden Ansprüche, **dadurch gekennzeichnet, dass** die Zusatzkammer (21) über eine Trennwand (22) von der Hauptkammer (19) separiert ist.

7. Kopfairbagmodul nach einem der vorhergehenden Ansprüche, **dadurch gekennzeichnet, dass** die Hauptkammer (19) an einer ihrer Längskanten in die, insbesondere streifenförmig ausgebildete Zusatzkammer (21) übergeht.

8. Kopfairbagmodul nach einem der vorhergehenden Ansprüche, **dadurch gekennzeichnet, dass** die Hauptkammer (19) und die Zusatzkammer (21), insbesondere an einem gemeinsamen Befestigungspunkt (32), an einem Dachrahmen (29) befestigt sind.

9. Kopfairbagmodul nach einem der vorhergehenden Ansprüche, **dadurch gekennzeichnet, dass** der Kopfairbag (1) mit seiner Hauptkammer (19) und seiner Zusatzkammer (21) durch zwei im wesentlichen deckungsgleiche Gewebe-Zuschnittteile (43) gebildet ist, die randseitig miteinander verbunden sind.

10. Verfahren zur crashbedingten Entfaltung eines Kopfairbags (1) eines Kopfairbagmoduls, nach einem der vorhergehenden Ansprüche, bei dem in einem ersten Entfaltungsschritt eine Airbag-Hauptkammer (19) des Kopfairbags (1) zwischen einem Fahrzeuginsassen und einer Fahrzeugseitenwand (9) entfaltet wird, und in einem zweiten Entfaltungsschritt zeitlich verzögert eine Airbag-Zusatzkammer (21) entfaltet wird, die die Airbag-Hauptkammer (19) in den Fahrzeuginnenraum (5) drückt.

## Claims

1. Head airbag module for a vehicle, the airbag (1) of which, in the event of a crash, is arranged with the airbag main chamber (19) thereof in the transverse direction (y) of the vehicle between a vehicle occupant and a vehicle side wall (9) bounding a vehicle interior (5), wherein the airbag (1), in addition to the airbag main chamber (19) thereof, has at least one additional chamber (21) which, when the airbag (1) is deployed in the event of a crash, pushes the airbag main chamber (19) in the transverse direction (y) of the vehicle into the vehicle interior (5), **characterized in that** the additional chamber (21) has a reduced length in the longitudinal direction (x) of the vehicle in comparison to the main chamber (19).

2. Head airbag module according to Claim 1, **characterized in that**, in the deployed state, the airbag additional chamber (21) is arranged between a vehicle pillar, in particular the B pillar (3), and the airbag main chamber (19).

3. Head airbag module according to either of Claims 1 or 2 **characterized in that** the additional chamber (21) is arranged between a rear region (23) and a front region (25) of the main chamber (19).

4. Head airbag module according to one of the preceding claims, **characterized in that** the additional chamber (21) is connected to the main chamber (19) in terms of flow by means of an overflow opening (24).

5. Head airbag module according to Claim 4, **characterized in that** the additional chamber (21) is connected downstream of the main chamber (19) in terms of flow.

6. Head airbag module according to one of the preceding claims, **characterized in that** the additional chamber (21) is separated from the main chamber (19) via a partition (22).

7. Head airbag module according to one of the preceding claims, **characterized in that** the main chamber (19) merges at one of the longitudinal edges thereof into the additional chamber (21), which is in particular of strip-shaped design.

8. Head airbag module according to one of the preceding claims, **characterized in that** the main chamber (19) and the additional chamber (21) are fastened to a roof frame (29), in particular at a common fastening point (32).

9. Head airbag module according to one of the preceding claims, **characterized in that** the head airbag (1) with the main chamber (19) thereof and with the additional chamber (21) thereof is formed by two substantially congruent cut fabric parts (43) which are connected to each other on the border side.

10. Method for the crash-induced deployment of a head airbag (1) of a head airbag module according to one of the preceding claims, in which, in a first deployment step, an airbag main chamber (19) of the head airbag (1) is deployed between a vehicle occupant and a vehicle side wall (9), and, in a second deployment step, an airbag additional chamber (21) is deployed in a temporally delayed manner, said airbag additional chamber pushing the airbag main chamber (19) into the vehicle interior (5).

## Revendications

1. Module de coussin gonflable de tête pour un véhicule, dont le coussin gonflable (1) est disposé, en cas de collision, de manière à ce que sa chambre principale de coussin gonflable (19) soit située, dans la direction transversale du véhicule (y), entre un occupant du véhicule et une paroi latérale du véhicule (9) limitant un espace intérieur du véhicule (5), le coussin gonflable (1) comprenant en plus de sa chambre principale de coussin gonflable (19) au moins une chambre supplémentaire (21) qui, lorsque le coussin gonflable (1) est déployé en cas de collision, pousse la chambre principale de coussin gonflable (19) dans la direction transversale du véhicule (y) dans l'espace intérieur du véhicule (5), **caractérisé en ce que** la chambre supplémentaire (21) présente une longueur réduite dans la direction longitudinale du véhicule (x) par comparaison avec la chambre principale (19).

2. Module de coussin gonflable de tête selon la revendication 1, **caractérisé en ce que** la chambre supplémentaire de coussin gonflable (21) est disposée, à l'état déployé, entre un montant de véhicule, en particulier le montant B (3), et la chambre principale de coussin gonflable (19).

3. Module de coussin gonflable de tête selon l'une quelconque des revendications 1 ou 2, **caractérisé en ce que** la chambre supplémentaire (21) est disposée entre une région arrière (23) et une région avant (25) de la chambre principale (19).

4. Module de coussin gonflable de tête selon l'une quelconque des revendications précédentes, **caractérisé en ce que** la chambre supplémentaire (21) est en liaison fluidique avec la chambre principale (19) au moyen d'une ouverture de trop-plein (24).

5. Module de coussin gonflable de tête selon la revendication 4, **caractérisé en ce que** la chambre supplémentaire (21) est connectée fluidiquement en aval à la chambre principale (19).

6. Module de coussin gonflable de tête selon l'une quelconque des revendications précédentes, **caractérisé en ce que** la chambre supplémentaire (21) est séparée de la chambre principale (19) par le biais d'une paroi de séparation (22).

7. Module de coussin gonflable de tête selon l'une quelconque des revendications précédentes, **caractérisé en ce que** la chambre principale (19), au niveau de l'un de ses bords longitudinaux, se prolonge par la chambre supplémentaire (21) réalisée en particulier en forme de bande.

8. Module de coussin gonflable de tête selon l'une quelconque des revendications précédentes, **caractérisé en ce que** la chambre principale (19) et la chambre supplémentaire (21) sont fixées à un cadre de toit (29), en particulier en un point de fixation (32) commun.

9. Module de coussin gonflable de tête selon l'une quelconque des revendications précédentes, **caractérisé en ce que** le coussin gonflable de tête (1) comprenant sa chambre principale (19) et sa chambre supplémentaire (21) est formé par deux parties découpées en étoffe (43) essentiellement coïncidentes, lesquelles sont reliées l'une à l'autre du côté des bords.

10. Procédé de déploiement provoqué par une collision d'un coussin gonflable de tête (1) d'un module de coussin gonflable de tête selon l'une quelconque des revendications précédentes, dans lequel, lors d'une première étape de déploiement, une chambre principale de coussin gonflable (19) du coussin gonflable de tête (1) est déployée entre un occupant du véhicule et une paroi latérale du véhicule (9) et, lors d'une deuxième étape de déploiement, une chambre supplémentaire de coussin gonflable (21) est déployée de manière retardée dans le temps, laquelle pousse la chambre principale de coussin gonflable (19) dans l'espace intérieur du véhicule (5).
